Europäisches Patentamt

European Patent Office

Office européen des brevets

(11) Numéro de publication : **0 441 702 A1**

# (12) DEMANDE DE BREVET EUROPEEN

(21) Numéro de dépôt : **91400282.9**

(22) Date de dépôt : **06.02.91**

(51) Int. Cl.⁵ : **G11B 20/00, G11B 27/30, H04N 5/91**

(30) Priorité : 07.02.90 FR 9001405

(43) Date de publication de la demande :
**14.08.91 Bulletin 91/33**

(84) Etats contractants désignés :
**DE ES GB**

(71) Demandeur : **TELEDIFFUSION DE FRANCE**
**10, rue d'Oradour sur Glane**
**F-75932 Paris Cédex 15 (FR)**

(72) Inventeur : **Farjaudon, Thierry**
**19, rue d'Estienne d'Orves**
**F-92120 Montrouge (FR)**
Inventeur : **Fouillet, Jean Marie**
**41, rue du Colonel Moll**
**F-93330 Neuilly Plaisance (FR)**
Inventeur : **Etienne, Francis**
**18, avenue du Bois Tardieu**
**F-92140 Clamart (FR)**
Inventeur : **Lebrat, François**
**23, rue de Rungis**
**F-75013 Paris (FR)**

(74) Mandataire : **Fréchède, Michel et al**
**Cabinet Plasseraud 84, rue d'Amsterdam**
**F-75009 Paris (FR)**

(54) Procédé et système de marquage et d'identification d'information numérisée.

(57)    L'information étant numérisée sous forme de mots successifs d'information $M_l$ constitués par un ensemble de bits, ces mots étant organisés en un arrangement séquentiel, le procédé consiste à associer aux mots d'information $M_l$ des données d'identification codées transparentes relativement à l'information numérisée, ces données d'identification pouvant être associées par codage spécifique d'un des bits des mots d'information $M_l$ ou par repérage d'un des bits de ce dernier pour constituer les données d'identification.

Application au marquage et à la protection de données numérisées telles que des données d'informations sonore ou vidéo pour des images fixes ou des images de télévision.

EP 0 441 702 A1

# FIG.1a.

a) 80 [1000] [0000]    11    // $Mi$ [1000] [0001] 81 $-Mi$    10    80    11    80    11

Mots (1)    (2)    // (i)             (N)

b) .80    10    // [1000] [0000] 80 $-Mi$    10    80    10    80    10

Mise à (1)    (2)    // (i)             (N)

zéro de 2°

| 0 | 1 | // 0 | 0 | 0 | 0 | 1 | 1 |

c) 0    1    // 0    0    0    0    1    1

(1)    (2)    (i)             (N)

Mots d'identification

à coder

d) 80    11    // 80 $-Mi$    10    80    10    81    11

(1)    (2)    // (i)             (N)

Mots d'information

encodés

# PROCEDE ET SYSTEME DE MARQUAGE ET D'IDENTIFICATION D'INFORMATION NUMERISEE

L'invention concerne un procédé et un système de marquage et d'identification d'information numérisée en vue de son identification et de sa protection. Avec le développement des techniques numériques dans la production et l'échange d'informations, informations sonore ou vidéo par exemple, le problème de l'identification, de l'origine et donc de la licéité de l'échange et de l'utilisation de ces informations est apparu de façon analogue à celui des logiciels en matière informatique.

En effet, contrairement aux productions analogiques d'images, par exemple sous forme de film ou d'enregistrement vidéo, lesquels impliquent à chaque copie à partir d'un original, ou même d'une copie elle même, l'introduction de dégradations sur le support d'information, et finalement de l'information elle même, lesquelles permettent une identification de la copie par comparaison à un original, les techniques numériques n'introduisent sensiblement pas de dégradations du support ou de l'information, et rendent de ce fait quasiment impossible une identification de la copie par comparaison, les très légères dégradations introduites du fait de la reproduction étant inhérentes au support et à la technique effectivement utilisés.

Par exemple, une image stockée sur un support informatique, tel qu'un disque souple ou un disque dur, ne subit au cours d'une duplication aucune dégradation, alors qu'un magnétoscope numérique introduit généralement quelques défauts imputables à la technique d'enregistrement employée.

Actuellement plusieurs techniques sont appliquées afin d'assurer l'identification de données, telles que des données numérisées d'images, ces techniques reposant essentiellement sur l'élaboration d'une signature directement visible par incrustation d'un texte ou d'un signe distinctif ou logo dans les données d'images précitées.

En ce qui concerne les données d'images animées, telles que les images de télévision, les normes de codage spécifient des techniques d'insertion de données auxiliaires, constituant des données d'identification, en dehors des lignes vidéo utiles. A titre d'exemple on peut citer les normes définies par les services CEEFAX ou DIDON.

Relativement aux images fixes numérisées, aucune norme de stockage n'est établie. L'image n'est autre qu'un fichier informatique, constitué des données vidéo numériques utiles formées par des mots d'information et structuré en fonction du dispositif numérique d'acquisition et de restitution. Dans ce cas, les techniques classiques de protection des fichiers informatiques, telles que inscription de messages d'identification dans des zones réservées du support d'information, peuvent être utilisées.

Les techniques de marquage précitées, ressortissant des techniques d'incrustation classiques, ne peuvent satisfaire les besoins de fourniture d'images non altérées et ne peuvent en définitive assurer une protection efficace, le message d'identification pouvant être supprimé, par un recadrage, dans le cas des images par exemple.

En outre, les données auxiliaires des systèmes de télévision ne sont pas protégées contre l'effacement ou la réécriture, la copie d'images vidéo directement à la source de restitution vidéo ne pouvant être efficacement contrôlée.

Plus récemment, un procédé de marquage et d'identification d'information numérisée a été décrit par le document Wo-A-89 08915. Dans son principe, ce procédé consiste à effectuer, dans des mots codés de manière numérique, le remplacemement d'au moins un bit peu significatif par un bit correspondant d'une information à coder. En particulier, ce remplacement peut être effectué sur des mots, séquences d'informations codées discrètes, ou sur un flot continu de bits par exemple. Toutefois, ce document se limite à énoncer les principes généraux correspondants.

Un autre procédé analogue a été décrit par la demande de brevet européen EP 0205 200 relativement à des informations de type audio-numérique, dans lequel l'information codée ajoutée est introduite au niveau des bits les moins significatifs au niveau de mots d'ordre déterminé. Le nombre de bits de ces mots sur lesquels l'information supplémentaire est ajoutée est déterminé en fonction de la valeur du mot, c'est-à-dire de l'amplitude du signal représenté par ces mots vis-à-vis d'une valeur arbitraire correspondant à une valeur de seuil.

Une telle technique apparaît devoir être réservée au type de signal audio-numérique.

Le procédé objet de la présente invention a pour but de remédier aux inconvénients précités afin de fournir des protections robustes contre l'utilisation illicite d'informations numérisées, telles que des images fixes ou animées, par exemple.

Un objet de la présente invention est un procédé de marquage d'information numérisée dans lequel les données constituant le message d'identification ne peuvent être détruites sans destruction correspondante de l'information ainsi marquée.

Un autre objet de la présente invention est cependant un procédé de marquage d'information numérisée dans lequel les données constituant le message d'identification, bien qu'indissociables de l'information numérisée proprement dite, sont transparentes à celle-ci.

Un autre objet de la présente invention est également un procédé de marquage d'information numérisée dans lequel les données d'identification peuvent être utilisées pour interdire l'utilisation de copies illicites de cette information, le caractère licite ou illicite de telles copies pouvant être discriminé à partir des données constituant le message d'identification.

Le procédé de marquage d'information numérisée, cette information étant numérisée sous forme de mots d'information successifs constitués par un ensemble de bits, ces mots étant constitués en un arragement séquentiel pour constituer l'information numérisée, selon la présente invention, est remarquable en ce qu'il consiste à associer aux mots d'information des données d'identification codées transparentes relativement à l'information numérisée.

Le procédé objet de l'invention trouve application à la protection contre l'utilisation illicite d'information numérisée telle que informations sonore et/ou vidéo.

En particulier le procédé objet de la présente invention est particulièrement bien adapté à la fourniture de protections robustes par identification, suite à un marquage, d'images numérisées fixes, naturelles ou de synthèse, ou d'images ou de programmes de télévision transmis ou enregistrés suite à un codage numérique.

Le procédé objet de la présente invention est en outre particulièrement avantageux en ce qu'il est susceptible de permettre la définition de protocoles de descrimination du caractère licite ou illicite de copies des informations numérisées protégées conformément au procédé objet de l'invention, en vue de l'interdiction de l'utilisation de telles copies, dans le cas où le caractère illicite de celles-ci a été établi.

Une description plus détaillée du procédé objet de la présente invention sera donnée ci-après en référence aux dessins dans lesquels :

    – la figure 1a représente, de manière illustrative, les différentes étapes permettant la mise en oeuvre du procédé objet de la présente invention, selon un premier mode de réalisation non limitatif et,

    – la figure 1b représente un détail de mise en oeuvre particulier d'une étape supplémentaire selon une variante avantageuse du mode de réalisation de la figure 1a ;

    – la figure 2a représente, également de manière illustrative, les différentes étapes permettant la mise en oeuvre du procédé objet de la présente invention selon un deuxième mode de réalisation non limitatif ;

    – la figure 2b représente, un détail de réalisation et de mise en oeuvre du mode de réalisation précité, tel que représenté en figure 2a ;

    – la figure 3 représente une autre variante de réalisation du procédé objet de l'invention dans lequel les variantes représentées en figure 1a et 2a sont en quelque sorte associées, pour constituer un procédé conforme à l'objet de la présente invention, cette autre variante de réalisation étant susceptible de présenter un caractère de plus grande probabilité de dissimulation des messages d'identification et, en définitive, une meilleure protection ;

    – la figure 4 représente un exemple de réalisation d'un système de marquage et d'identification d'information numérisée permettant la mise en oeuvre du procédé selon l'invention,

    – les figures 5a et 5b représentent une variante de réalisation du système selon l'invention tel que représenté en figure 4, plus spécialement adapté à l'interdiction de copies de deuxième génération de bandes d'enregistrement numérique vidéo, de programmes de télévision par exemple.

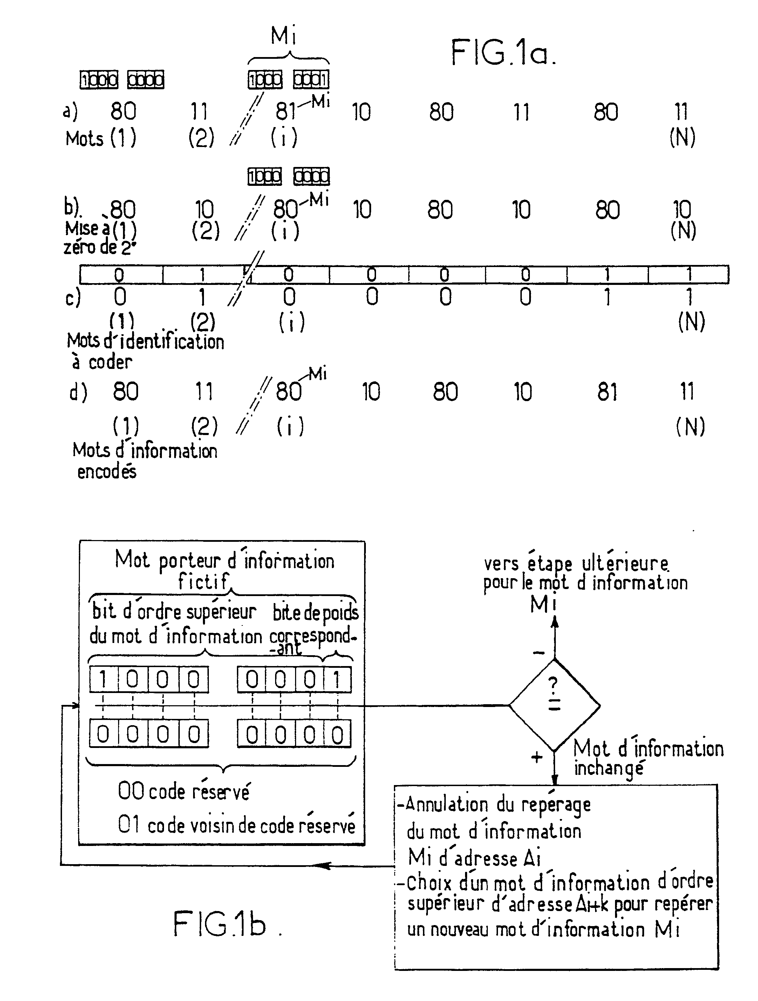

Une description plus détaillée du procédé de marquage et d'identification d'information numérisée conforme à l'objet de la présente invention sera maintenant donnée en liaison avec la figure 1a.

Selon le procédé objet de la présente invention, celui-ci s'applique à une information numérisée sous forme de mots successifs notés $M_i$ où i représente l'ordre du mot au cours de l'inscription ou de la lecture de l'information numérisée précitée sur le support correspondant, cette information étant ainsi constituée par un ensemble de bits, les mots $M_i$ étant organisés en un arrangement de type séquentiel.

Selon le procédé objet de l'invention, celui-ci consiste à associer aux mots d'information $M_i$ des données d'identification codées transparentes relativement à l'information numérisée précitée.

De manière générale on considèrera des mots $M_i$ constitués par N bits, le nombre N pouvant selon un exemple de réalisation non limitatif être par exemple égal à 8 et les mots d'information étant ainsi constitués en octet.

On notera en particulier, ainsi que représenté sur la figure 1a, que les mots $M_i$ peuvent par exemple être représentés selon un codage hexadécimal, un ensemble de N mots $M_i$, avec i variant de 1 à N, étant représenté sur la ligne $\underline{a}$ de la figure 1a précitée. La représentation du codage des mots correspondant au codage hexadécimal, ainsi que mentionné précédemment, le premier chiffre correspond à la valeur du quarté d'ordre supérieur codé en binaire et le deuxième chiffre, dans le sens de l'écriture ou de la lecture des mots, correspond à la valeur également codée en binaire du quarté d'ordre inférieur, ainsi qu'on l'a représenté en figure 1a. Pour l'exemple de réalisation de la figure 1a, en particulier à la ligne $\underline{a}$ de celle-ci, le mot $M_i$ correspond à la valeur hexadécimale 81. On comprendra bien sûr que les huits mots représentés à la ligne $\underline{a}$ de la figure 1a constituent en fait huit mots successifs enregistrés sur le support d'information, les mots étant codés ainsi que décrit précédemment.

Ainsi qu'on l'a représenté également en figure 1a et à seul titre d'exemple dans le cas où les mots d'information $M_i$ sont codés sur huit bits, selon une première variante de mise en oeuvre du procédé objet de l'invention, les données d'identification de l'information numérisée précitée sont associées par codage spécifique d'un des bits de poids le moins élevé d'une pluralité de mots d'information $M_I$, ces mots étant ainsi conformés en mots porteurs de données d'identification.

Bien entendu, et selon un aspect avantageux du procédé objet de l'invention, tel que représenté notamment en figure 1a, la pluralité de mots d'information $M_I$ porteurs de données d'identification est un multiple du nombre N de bits des mots de code constitutifs des données d'identification.

Les données constituées par les mots d'identification sont constituées par une ou plusieurs chaînes de caractères alpha-numériques par exemple.

Conformément au mode de réalisation de la figure 1a, les données d'identification sont associées par codage spécifique d'un des bits de poids le moins élevé sur une pluralité de mots d'information $M_I$ d'adresse déterminée $A_I$ dans l'arrangement séquentiel.

Ainsi qu'on l'a représenté notamment en figure 1a, à titre de seul exemple, les adresses Ai sont régulièrement réparties dans l'arrangement séquentiel de sorte que les N mots d'information $M_I$ sont successifs, le codage spécifique d'un des bits de poids le moins élevé intervenant alors sur chaque mot d'information adjacent $M_I$.

Bien entendu les adresses des mots d'information $M_I$ sur lesquels le codage spécifique est effectué peuvent avantageusement être régulièrement réparties dans l'arrangement séquentiel selon une loi de périodicité donnée. La loi de périodicité peut être définie de façon à ménager des intervalles d'adresses identiques entre les mots d'information $M_I$ codés pour constituer ainsi des mots porteurs de données d'identification, ou des intervalles d'adresses différents répartis selon une loi périodique donnée.

En outre, et de manière particulièrement avantageuse selon un mode de réalisation préférentiel du procédé objet de l'invention, les adresses des mots d'information $M_I$ codés pour constituer des mots porteurs de données d'identification peuvent au contraire être répartis de manière aléatoire ou pseudo-aléatoire dans l'arrangement séquentiel.

On notera bien entendu qu'une telle répartition aléatoire ou pseudo-aléatoire des adresses précitées rend d'autant plus délicate la détermination frauduleuse d'information des mots d'information $M_I$ porteurs de données d'identification.

Bien entendu, pour des mots d'information et/ou des mots de données d'identification codés sur N bits, la valeur de chaque bit d'un mot de données d'identification à coder a pour valeur, dans l'ordre de succession des mots d'information $M_I$ codés par codage spécifique, la valeur $2^{N-1}$ à $2^0$. En fait à chaque mot d'information $M_I$, pour une pluralité N de ces mots, est associée une valeur de poids correspondant au poids des bits de codage d'un mot de données d'identification considéré, dans le sens de la succession d'information $M_I$ précitée.

Un exemple plus spécifique de codage de N mots d'information $M_I$, et plus particulièrement de huit de ces mots, sera donné en liaison avec les lignes b, c, d de la figure 1a. Bien que sur la figure 1a précitée les mots d'information $M_I$ soumis au codage pour constituer les mots porteurs de données d'identification soient représentés successifs on comprendra bien sûr que ces mots peuvent se succéder de manière quelconque, ces mots d'information $M_I$ étant repérés successivement par leur adresse Ai dans l'arrangement séquentiel. Les mots d'information $M_I$ précités appartiennent ainsi au support d'origine ou source et sont ainsi sélectionnés par leur adresse.

Selon le procédé objet de l'invention, ainsi que représenté à la ligne b de la figure 1a, au bit de poids le moins élevé par exemple de chacun des mots $M_I$ d'information est affectée la valeur zéro de façon à effectuer ainsi une unification de valeur au niveau du bit de poids le moins élevé du mot considéré. On constate ainsi que sur la ligne b de la figure 1a l'ensemble des mots d'information $M_I$ et en particulier le bit de poids zéro du quarté d'ordre inférieur de codage de ces derniers à pour valeur zéro.

Sur la ligne c de la figure 1a, on a représenté un des mots de données d'identification à coder. Ce mot est bien entendu codé sur N bits et dans l'exemple de réalisation de la figure 1a sur huit bits. Ce mot ou octet, à titre d'exemple non limitatif, correspond au caractère alpha-numérique C dont la représentation en codage ASCII hexadécimal est donnée par la valeur 43. Sur la ligne c de la figure 1a on a donc représenté le caractère alpha-numérique C correspondant, codé en binaire, l'ordre des bits 1,i à N correspondant bien entendu, selon l'ordre de poids décroissant de ces derniers, à l'ordre successif des mots d'information $M_I$ précédemment sélectionnés.

Enfin, conformément au procédé objet de la présente invention, ainsi que représenté en ligne d de la figure 1a, au bit de poids le moins élevé des mots d'information $M_I$ repérés est affectée respectivement, dans l'ordre de leur repérage, la valeur du bit de poids correspondant du mot de données d'information à coder, le caractère alpha-numérique C dans l'exemple représenté en figure 1a. Une telle affectation permet ainsi de constituer des mots d'information $M_I$ porteurs de données d'identification. Bien entendu on comprendra que l'affectation précitée est effectuée par une opération d'addition logique (opération OU entre le bit de poids le moins élevé du quarté inférieur du mot d'information $M_I$ représenté par exemple à la ligne b de la figure 1 et le bit correspondant du mot de données d'identification à coder, soit le caractère alpha-numérique C représenté à la ligne c de la figure 1a précitée).

On comprendra bien entendu qu'afin de coder un mot de données d'identification comportant par exemple trois caractères alpha-numériques pour constituer un message d'identification, chaque caractère du message précité d'identificaion étant transposé sur une suite de huit mots d'information $M_i$, il est donc nécessaire par exemple d'effectuer les opérations précédemment décrites en liaison avec la figure 1 sur 24 mots d'information $M_i$ des données d'information numérisées à marquer et à protéger.

Bien entendu, le procédé objet de l'invention peut avantageusement comporter, préalablement à l'étape consistant à affecter au bit de poids le moins élevé de chacun des N ou 8 mots d'information repérés, une étape de contrôle ayant pour objet de prévenir l'apparition de codes réservés tels que par exemple les codes OO ou FF en codage hexadécimal, réservés pour l'identification de données auxiliaires et des séquences de référence de rythme en télévision numérique.

Dans ce but, l'étape de contrôle peut consister à comparer bit à bit la valeur des bits d'un mot porteur de données d'identification fictives tel qu'un mot formé par le bit de poids correspondant du mot à encoder et par les bits de poids supérieur du mot porteur d'information $M_i$ aux mots de code réservés précités ou à des mots de code voisin tels que 01 respectivement FE par exemple.

En cas de réponse positive au test précité, l'étape précédente consistant à sélectionner le mot d'information $M_i$ pour ce mot considéré est annulée pour effectuer par exemple une nouvelle étape de sélection relativement à un mot d'information $M_i$ d'adresse Ai + k d'ordre supérieur dans l'arrangement séquentiel pour repérer un mot d'information de substitution dont les bits de poids supérieur associés aux bits de poids correspondant à encoder sont différents du code réservé ou du code voisin précités. Une telle étape de contrôle permet alors de se prémunir de l'encodage des mots de code réservés ou de code voisin précédemment mentionnés.

On notera en particulier que dans le procédé objet de la présente invention tel que représenté dans les figures 1a et 1b, les données d'identification sont inscrites par modification d'un niveau de quatification des mots d'information représentatifs de l'information numérisée. L'incidence de l'insertion des mots ou octets constituant le message d'identification conformément au procédé objet de l'invention, notamment lorsque celui-ci est appliqué à une image de type télévision, est imperceptible sur l'image puisque bien entendu les bits des mots d'information $M_i$ ainsi modifiés sont les bits de poids le moins élevé. L'incidence d'une telle insertion sur le signal effectivement restitué à pu être chiffrée à 0,4 % de l'amplitude avant filtrage de ce dernier. En outre, les zones d'insertion des données d'identification peuvent être choisies hors du champ de l'image analogique utile, la ligne active numérique étant plus large que la ligne active analogique.

Selon une variante de la procédure de contrôle précédemment décrite en liaison avec la figure 1b, la tranformation des mots d'information d'origine $M_i$ en mots modifiés identiques aux mots réservés tels que OO et FF en codage hexadécimal étant peu probable, il est en outre possible, si le mot d'information $M_i$ après encodage des données d'identification obtenu est OO, de remplacer avantageusement celui-ci par exemple par le mot O2 et si au contraire le mot d'information obtenu après encodage est FF celui-ci peut alors être avantageusement remplacé par FD.

En effet, avec ce choix judicieux de codage des mots d'information $M_i$ après encodage des données d'identification, l'écart entre les mots d'information $M_i$ avant et après encodage porte seulement sur le bit de poids faible des mots $M_i$.

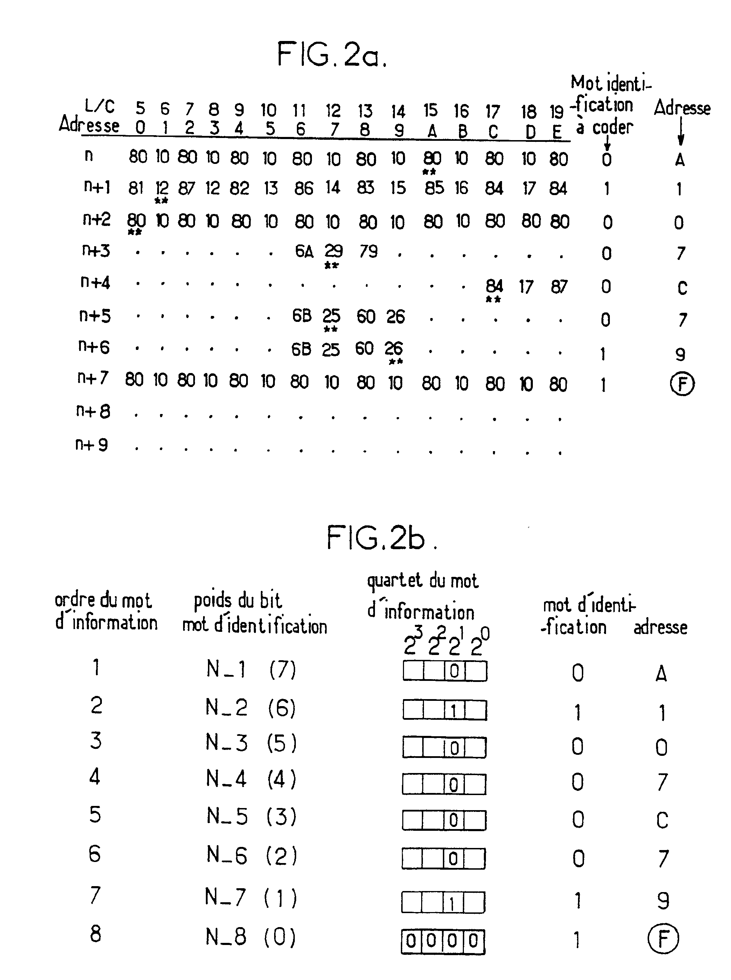

Un autre mode de réalisation du procédé objet de la présente invention sera maintenant décrit en liaison avec les figures 2a et 2b.

Dans ce nouveau mode de réalisation, les données d'identification ne sont pas inscrites, les mots d'information $M_i$ étant alors maintenus inchangés, mais la composition des mots constituant les données d'identification est repérée au sein des mots d'information $M_i$ constituant les données numérisées utiles d'origine ou éventuellement partiellement altérées.

De la même manière que dans le mode de réalisation précédemment décrit, la composition des mots formant les données d'identification ou message d'identification est définie par exemple par une suite de caractères alpha-numériques de type ASCII, ces caractères étant codés ainsi que précédemment mentionné sur N bits et par exemple, ainsi qu'il sera décrit de manière non limitative en liaison avec les figures 2a et 2b, pour un codage sur huit bits.

Selon ce nouveau mode de réalisation du procédé objet de l'invention, les données d'identification sont associées sous forme d'au moins un mot à coder aux mots d'information $M_i$ par des opérations consistant successivement à repérer dans les mots d'information successifs de l'ensemble de bits constitutifs de l'information numérisée un bit présentant la valeur du bit de poids déterminé du mot à coder, c'est-à-dire du caractère alpha-numérique constitutif du message d'identification, puis à associer au bit ainsi repéré le poids correspondant au poids du bit du mot à coder pour constituer un bit repéré du mot à coder. L'adresse du mot d'information $M_i$ ainsi repéré, et du bit repéré de celui-ci, est alors mémorisée sur le support d'information numérisée.

Les opérations précédemment mentionnées sont alors répétées successivement pour les bits successifs du mot à coder, c'est-à-dire du caractère constitutif du message d'identification, pour constituer un fichier d'identification de l'information numérisée. Bien entendu, le fichier d'identification de l'information numérisée peut être mémorisé dans une zone d'identification d'information mémorisée ménagée sur le support des informations numérisées, ou sur tout autre support distinct de ce dernier.

Une description plus détaillée du procédé objet de l'invention dans son deuxième mode de réalisation sera donnée en liaison avec les figures 2a et 2b dans le cas plus spécifique d'une information numérisée constituée par une image de télévision numérique par exemple.

Sur la figure 2a on a représenté à titre d'exemple le repérage d'un caractère alpha-numérique "C" constitutif d'un message d'identification à coder. Ce caractère alpha-numérique C ainsi que mentionné précédemment est représenté en ASCII par le code 43 en code hexadécimal. Sur la figure 2a on a représenté le caractère alpha-numérique précité constituant le mot d'identification à coder en représentation en code binaire, de façon à représenter l'ensemble des bits de celui-ci.

De manière avantageuse, les bits correspondants du mot d'identification à coder précité sont repérés sur les lignes successives de l'image, lesquelles sont représentées sur la figure 2a et numérotées à partir d'une ligne de balayage d'image $\underline{n}$ jusqu'à n+7 par exemple.

De préférence, les bits correspondants du mot d'identification à coder, le caractère alpha-numérique C, sont repérés sur les lignes précitées de l'image entre les colonnes d'un ordre déterminé, p et q de l'image. Selon le mode de réalisation non limitatif de la figure 2a, les colonnes $\underline{p}$ et $\underline{q}$ correspondent aux colonnes 5 et 19 de l'image dans le sens de balayage ligne de celle-ci.

Selon une autre caractéristique avantageuse du procédé objet de l'invention dans le deuxième mode de réalisation présentement décrit, les bits correspondants du mot d'identification à coder, tel que le caractère alpha-numérique C par exemple, sont repérés sur le bit de poids $2^1$ des mots d'information $M_i$.

Les adresses Ai correspondantes des mots d'information $M_i$ ainsi repérés sont alors définies ainsi que représentées sur la figure 2a en adressage relatif par rapport à la grille de référence constituée par les lignes n et d'ordre supérieur et les colonnes d'ordre $\underline{p}$ et $\underline{q}$ précédemment citées. Le codage des adresses Ai en adressage relatif des mots d'information $M_i$ est alors avantageusement effectué en code hexadécimal. Sur la figure 2a on a représenté les mots d'information successifs $M_1$ sur la ligne $\underline{n}$, $M_2$ sur la ligne n+1 et $M_i$ sur la ligne n+3 par exemple et suivants soulignés par **. L'adresse correspondante en code hexadécimal du mot d'information repéré est reportée de même sur la figure 2a pour chaque ligne considérée.

Sur la figure 2b, et dans le cas particulier non limitatif donné à seul titre d'exemple où les mots d'information et le mot d'identification à coder tel que le caractère alpha-numérique C sont codés sur huit bits, on a représenté successivement l'ordre du mot d'information considéré, le poids correspondant du bit du mot d'identification à coder, le quarté inférieur du mot d'infomation $M_i$, le bit correspondant du mot d'identification à coder étant repéré sur le bit de poids $2^1$, le mot d'identification, le caractère alpha-numérique C et l'adresse de chaque bit ainsi repéré. On notera cependant, ainsi que représenté à la ligne n+7 de la figure 2a ou de la figure 2b, que si le bit à repérer, et donc à coder, n'est pas disponible dans l'intervalle ligne colonne précité un code spécifique d'adresse peut être utilisé, le code F en code hexadécimal par exemple. Cette adresse spécifique est symboliquement représentée par le code lui-même cerclé, et correspond au complément des valeurs de bit de la ligne considérée, soit 0 ou 1.

L'adresse des bits ainsi repérés est constituée en fichier permettant la reconstitution de l'identification.

Un avantage essentiel du mode de réalisation du procédé objet de l'invention, tel que décrit en figure 2a et 2b, réside dans le fait que l'identification de l'image ou des données numérisées constituant celle-ci peut être ainsi effectuée en l'absence de modification de celle-ci ou, à tout le moins, compte tenu d'un minimum de modification par exemple.

Bien entendu, le procédé objet de l'invention peut également être mis en oeuvre par combinaison des premier et deuxième modes de réalisation précédemment décrits.

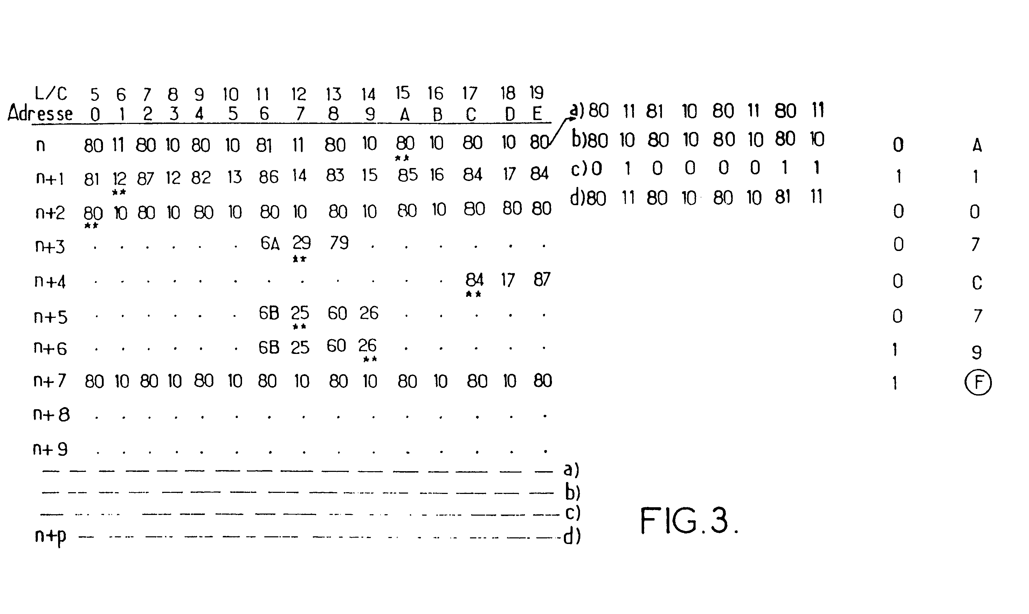

Dans ce cas, ainsi que représenté en figure 3, les données d'identification sont associées aux mots d'information numérisée du support d'information source ou origine, le repérage des bits du mot ou caractère alpha-numérique étant effectué conformément aux deuxième mode de réalisation précité, ainsi que représenté en figure 3, de manière semblable à celle de la figure 2a et 2b pour les mots d'information d'une des lignes par exemple la ligne $\underline{n}$, en particulier les mots d'information $M_i$ situés aux adresses Ai O à 7 de celle-ci étant encodés selon les étapes $\underline{a}$, $\underline{b}$, $\underline{c}$, $\underline{d}$ telles que représentées selon le premier mode de réalisation illustré en figure 1a et 1b.

L'introduction de l'encodage précité au niveau de certains des mots d'information $M_i$ tel que représenté en figure 3 ou d'altération sur les mots précités préalablement à la constitution du fichier d'identification par mémorisation des adresses conformément au deuxième mode de réalisation précédemment décrit permet en définitive de particulariser les données numérisées, par exemple l'image de télévision ainsi marquée. L'identification ainsi attachée à l'image précitée permet de lever les incertitudes qui résulteraient de l'identification de la même image d'origine destinée à d'autres utilisateurs.

Le procédé objet de l'invention, notamment dans le mode de réalisation tel que représenté en figure 3, permet d'assurer un haut degré de sécurité du marquage des informations numérisées notamment par la redondance des informations accessibles et de la difficulté de décodage de celles-ci pour les tiers non autorisés.

On comprendra bien entendu que le procédé objet de l'invention peut être utilisé pour la protection contre les copies illicites de programmes en télévision numérique. Dans un tel cas, les mots d'information peuvent avantageusement être localisés dans des portions du format du multiplex vidéo numérique susceptible d'être enregistrées par des magnétoscopes de télévision numérique.

Pour un programme de télévision dont la copie finale est effectuée sur une bande magnétique à enregistrement numérique, le procédé objet de l'invention peut bien entendu être utilisé. Dans un tel cas il suffit alors de sélectionner quelques images particulières de ce programme afin d'appliquer à celles-ci le procédé selon l'invention.

Une des caractéristiques des magnétoscopes numériques pour images de télévision numérique est notamment l'introduction de dégradations sur les signaux numériques, ces dégradations étant liées aux techniques d'enregistrement lecture de ce type d'appareil tel que défaut des bandes magnétiques, défaut de contact entre les têtes magnétiques d'inscription-lecture et les bandes magnétiques d'enregistrement.

Pour minimiser ces défauts, les magnétoscopes de télévision numérique mettent en oeuvre des techniques de correction d'erreurs et de dissimulation d'erreurs, ces techniques ayant fait l'objet de la recommandation 657 du CCIR (Comité Consultatif International des Radio-communications).

Les processus de lecture et de copie ultérieurs des informations numérisées pouvant mettre en oeuvre des techniques de dissimulation d'erreurs risquent de dégrader les informations d'identification enregistrées conformément au procédé objet de l'invention. Il est alors utile de répéter plusieurs fois l'enregistrement de ces informations d'identification, les mots d'information $M_i$ dans lesquels seront associées les informations d'identification étant choisis de telle sorte que la probabilité de dissimulation en lecture de l'ensemble de ces mots soit faible. Un critère de choix de tels mots peut par exemple consister en l'emploi de mots correspondant à des échantillons spacialement voisins dans l'image en luminance, et en l'utilisation des mots qui sont enregistrés sur la bande magnétique aux endroits les moins critiques.

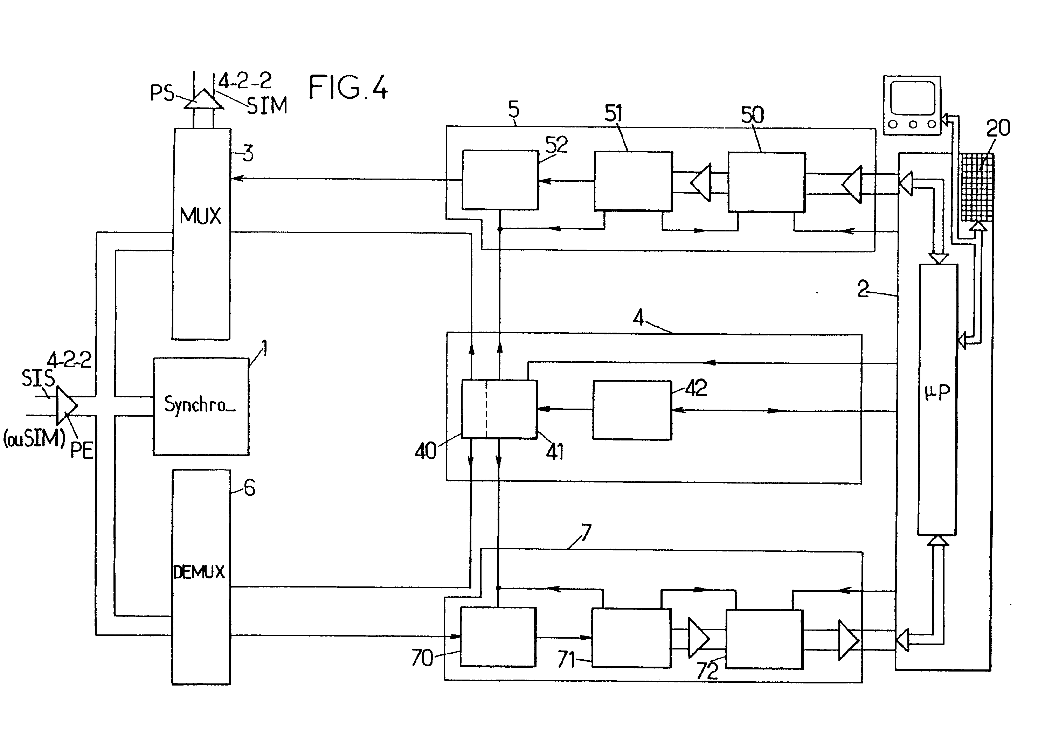

Une description d'un système de marquage et d'identification d'information numérisée permettant la mise en oeuvre aux images de télévision numérique du procédé objet de l'invention précédemment décrit sera maintenant donnée en liaison avec les figures 4 puis 5a, 5b.

Par convention, on désignera par information source l'information non marquée et par information marquée l'information source à laquelle les données d'identification ont été associées conformément au procédé objet de l'invention précédemment décrit. L'identification de l'information numérisée est alors effectuée par restitution à partir de l'information marquée des données d'identification.

Ainsi qu'on l'a représenté en figure 4, le système selon l'invention comporte un port d'entrée noté PE d'un signal noté SIs support de l'information source ou d'un signal noté SIm support de l'information marquée, ainsi qu'un port de sortie noté PS du signal support de l'information marquée.

Le système objet de l'invention comporte également un circuit 1 extracteur d'un signal de synchronisation à partir du signal support d'information source ou marquée. A titre d'exemple non limitatif, lorsque les informations numérisées sont constituées par des mots d'information $M_i$ d'une image de télévision par exemple, le signal de synchronisation comporte de manière classique un signal de synchronisation d'octets, un signal de synchronisation de lignes et un signal de synchronisation de trames. L'ensemble de ces signaux ne sera pas décrit car il correspond aux signaux de synchronisation des deux types standards 525/60 ou 625/50. Ces signaux de synchronisation sont disponibles dans l'ensemble du système tel que représenté en figure 4 à partir d'un bus de synchronisation de type classique non représentée sur la figure précitée.

Ainsi qu'on le remarquera également sur la figure 4, le système comporte un circuit 2 de commande du marquage ou de l'identification de l'information numérisée.

Un circuit 3 multiplexeur de bits est en outre prévu, ce circuit étant interconnecté au port d'entrée PE. Il reçoit ainsi le signal SIs support de l'information source ou le signal SIm support de l'information marquée. Le circuit multiplexeur 3 est connecté au circuit 2 de commande par l'intermédiaire d'un premier 4 et d'un deuxième 5 circuits spécialisés.

Le premier circuit spécialisé 4 permet d'assurer la commande fonctionnement/arrêt du circuit multiplexeur 3 en fonction de la nature de l'information source ou marquée présente au port d'entrée PE.

Le deuxième circuit spécialisé 5 par contre, permet d'engendrer et de délivrer au circuit multiplexeur 3 un bit de substitution dans un mot d'information $M_i$ considéré.

En outre le système comporte également un circuit 6 démultiplexeur de bits interconnecté au port d'entrée PE. Le circuit démultiplexeur 6 reçoit le signal support de l'information source ou marquée, SIS ou SIM. Le circuit démultiplexeur 6 est en outre connecté au circuit de commande 2 par l'intermédiaire du premier circuit spécialisé 4, lequel permet d'assurer la commande arrêt/fonctionnement du circuit démultiplexeur 6 en fonction de la nature de l'information source ou marquée.

En outre ce même circuit démultiplexeur 6 est connecté au circuit de commande 2 par l'intermédiaire d'un troisième circuit spécialisé 7 permettant d'assurer l'extraction à partir d'un mot d'information $M_i$, d'un bit significatif des données d'identification.

On comprendra ainsi que le circuit de commande 2 permet à partir du signal de synchronisation d'assurer en fonction de la nature de l'information numérisée, information source ou information marquée, la substitution respectivement l'extraction d'un bit du mot d'information $M_i$ pour engendrer ou restituer les données d'identification tel que le caractère C par exemple précédemment décrit.

Ainsi qu'on le remarquera en outre sur la figure 4, le premier circuit spécialisé 4 comporte à titre d'exemple non limitatif un premier circuit d'activation/inhibition et d'inhibition/activation du multiplexeur 3 respectivement démultiplexeur 6 et un circuit de commande 41 du choix du poids du bit du mot d'information $M_i$ sur lequel le bit significatif de données d'identification est substitué, au niveau du multiplexeur 3, respectivement extrait au niveau du démultiplexeur 6. On comprendra bien entendu que selon un mode de réalisation avantageux, les circuits de commande 40 et 41 peuvent être constitués par un seul et même circuit, lequel en fonction d'instructions reçues à partir du circuit de commande 2 peut par exemple délivrer une instruction codée, sur 4 bits par exemple, permettant d'assurer à la fois les fonctions d'activation/inhibition et inhibition/activation du multiplexeur 3 et du démultiplexeur 6 ainsi que le choix du poids du bit du mot d'information $M_i$ sur lequel le bit significatif est substitué ou extrait.

Dans un mode d'exécution du système objet de l'invention, les ports d'entrée et de sortie PE et PS sont constitués par des ports d'entrée et de sortie vidéo-numérique à interfaces parallèles selon la norme 4-2-2 à 8 bits de données plus un signal d'horloge. Les signaux support d'information source ou marquée sont au niveau TTL, les étages de conversions ECL/TTL et TTL/ECL n'étant pas représentés sur la figure 4. Les multiplexeurs 3 démultiplexeurs 6 sont constitués par des multiplexeurs démultiplexeurs numériques.

On notera en outre, ainsi qu'on l'a représenté en figure 4, que le premier circuit spécialisé 4 comporte un circuit de mémorisation des adresses des mots d'information $M_i$. A titre d'exemple non limitatif, lorsque l'information numérisée est constituée par une image de télévision, un séquencement du système sur l'ensemble de l'image nécessite un circuit de mémorisation de capacité de 64 k octets ce qui permet de mémoriser les adresses de 16 384 mots d'information $M_i$ repérés en ligne et en colonne dans l'image par un couple de deux mots de deux octets ; alors qu'un séquencement restreint à un balayage ligne par exemple nécessite la connaissance d'un numéro de ligne correspondant, soit 2 octets. Bien entendu le circuit de mémorisation d'adresses des mots d'information $M_i$ est lui-même interconnecté au circuit de commande 2 et mis à jour par celui-ci. D'autres solutions telles que l'utilisation d'une mémoire de type PROM peuvent être envisagées.

Ainsi qu'on l'a en outre représenté en figure 4, le deuxième circuit spécialisé 5 comprend une mémoire de caractères notée 50 interconnectée au circuit de commande 2. Cette mémoire de caractères est destinée à mémoriser le ou les caractères constitutifs des données ou messages d'identification à insérer dans les données d'information numérisée, par exemple le caractère C précédemment mentionné. La mémoire de caractères 50 est une mémoire de type RAM dont la capacité est fonction de la taille des messages d'identification à insérer.

Dans le deuxième circuit spécialisé 5 est également prévu un circuit 51 de formatage de caractères lequel est interconnecté à la mémoire de caractères 50. Ce circuit de formatage est destiné à extraire et à formater séquentiellement les caractères constitutifs des données emmagasinées dans la mémoire 50.

Le deuxième circuit spécialisé 5 comporte enfin un circuit 52 générateur de bits significatifs, lequel est interconnecté au circuit de formatage précité et au premier circuit spécialisé 4. Le circuit générateur de bits 52 peut être constitué par une mémoire de type RAM organisée en bits, chaque bit constituant un bit significatif des données d'identification à insérer dans l'un des mots d'information $M_i$ pouvant être lu séquentiellement par le circuit multiplexeur 3. On notera en outre que le circuit 51 de formatage de caractères prend en compte les conflits d'accès de lecture-écriture du circuit 52 générateur de bits, l'instruction de transfert des bits significatifs vers le circuit 52 générateur de bits étant engendré par le circuit de commande 2 par l'intermédiaire du premier circuit spécialisé 4, en particulier les circuits 40 et 41 par exemple.

Le troisième circuit spécialisé 7, ainsi que représenté en figure 4, comporte sensiblement des éléments duaux des éléments constitutifs du deuxième circuit spécialisé 5.

Ainsi que représenté sur la figure 4 précitée, le troisième circuit spécialisé comprend un premier circuit 70 de mémorisation de bits, ce circuit étant interconnecté au démultiplexeur 6 et au premier circuit spécialisé 4. Le premier circuit de mémorisation 70 est constitué par exemple par une mémoire de type RAM déstinée à recevoir séquentiellement du démultiplexeur 6 le bit significatif des mots d'information $M_i$ successifs porteurs des données d'identification.

Un deuxième circuit 71 de mémorisation de caractères est connecté au premier circuit 70 de mémorisation de bits. Ce deuxième circuit de mémorisation permet de mémoriser et formater les bits significatifs successifs délivrés par le circuit de mémorisation de bits 70. Le deuxième circuit 71 permet d'assurer la composition des messages sous forme de caractères ASCII tel que le caractère C précédemment cité.

Un troisième circuit 72 de mémorisation de chaînes de caractères est prévu. Ce circuit est interconnecté au deuxième circuit 71 de mémorisation et au circuit de commande 2, il délivre le message d'identification constitué par la chaîne de caractères mémorisée au circuit de commande 2 en vue d'un traitement ultérieur. On notera en outre que le deuxième circuit de mémorisation de caractères permet de prendre en compte les conflits d'accès lecture/écriture du premier circuit 70 de mémorisation de bits lors du transfert, l'ordre de transfert étant également engendré par le circuit de commande 2 par l'intermédiaire des circuits 40 et 41 du premier circuit spécialisé 4. Le troisième circuit de mémorisation 72 peut alors être constitué par une mémoire de type RAM organisée en octets afin d'assurer la mémorisation des chaînes de caractères précitées.

Le circuit de commande 2 a pour fonction d'assurer la gestion de lecture et d'écriture des circuits de mémorisation tels que le circuit de mémorisation 42 du premier circuit spécialisé 4, 52 du deuxième circuit spécialisé 5 et 72 du troisième circuit spécialisé 7. Il permet d'assurer en outre la gestion des instructions de commande des éléments tels que les circuits 40, 41 du premier circuit spécialisé 4, 51 du deuxième circuit spécialisé 5 et 71 du troisième circuit spécialisé 7 en permettant l'insertion et l'extraction des messages d'identification conformément au procédé objet de l'invention précédemment décrit.

A cet effet, le circuit de commande 2 comporte notamment un micro-processeur. Celui-ci pouvant être constitué par un micro-processeur 8 ou 16 bits par exemple. Le micro-processeur précité permet d'assurer le fonctionnement du système tel que décrit en figure 4 conformément aux séquencements précédemment mentionnés. En outre, le circuit de commande comporte un circuit 20 d'interfaçage d'entrée-sortie permettant l'introduction par exemple des adresses $A_i$ des mots d'information $M_l$ sur lesquels l'insertion ou la lecture du bit significatif des données d'identification doit être effectuée, la composition des messages d'identification à insérer ou l'affichage des messages d'identification lus. Sur la figure 4 on a représenté le circuit 20 d'interfaçage sous forme d'un clavier-écran de façon non limitative à titre de seul exemple. Il est bien entendu que le circuit d'interfaçage précité peut être constitué par tout élément d'introduction d'un fichier d'adresses correspondantes ou par un calculateur auxiliaire par exemple. Le circuit d'interfaçage 20 permet également à un utilisateur de qualifier la nature de l'information numérisée, source ou marquée, présente au port d'entrée PE, à partir d'une touche spécialisée par exemple.

Le procédé et le système objets de l'invention apparaissent particulièrement avantageux dans la mesure où celui-ci est susceptible d'être utilisé afin d'assurer une interdiction d'emploi de copies illicites d'information numérisée, notamment d'images de télévision, ainsi qu'il sera décrit ultérieurement dans la description.

Dans ce but il convient d'une part de disposer d'informations d'identification enregistrées conformément au procédé objet de l'invention, informations d'identification pour lesquelles la probabilité de dissimulation en lecture est faible et d'autre part d'enregistrer de manière aléatoire ou pseudo-aléatoire, ou éventuellement en permanence, des informations de contrôle, par exemple selon le premier mode de réalisation du procédé objet de l'invention, dans lequel un encodage des mots d'information $M_l$ est effectué, les mots d'information précités étant choisis de façon que la probabilité de dissimulation en lecture de ces mots soit importante.

Les informations de contrôle ainsi enregistrées sont alors affectées d'erreurs dues à la mise en service des circuits de dissimulation du magnétoscope de lecture lors de la lecture de la première génération d'informations numérisées constituée par l'original pour constituer une copie de première génération. Le réenregistrement de cette bande par copie directe reste possible et conduit à une copie de deuxième génération. L'interdiction de la relecture de cette deuxième copie de deuxième génération, peut être alors envisagée sur la base d'une détection des erreurs introduites du fait de l'enregistrement de la copie de deuxième génération, ces erreurs n'étant plus imputables à la mise en service des circuits de dissimulation du magnétoscope de lecture. Une discrimination entre les copies de première génération et les copies de deuxième génération peut être ainsi effectuée, la lecture des copies de première génération pouvant ainsi être seule autorisée, l'interdiction de la lecture des copies de deuxième génération pouvant être effectuée dès la détection de la première erreur sur les informations de contrôle non dues à la mise en oeuvre des circuits de dissimulation du magnétoscope de lecture correspondant.

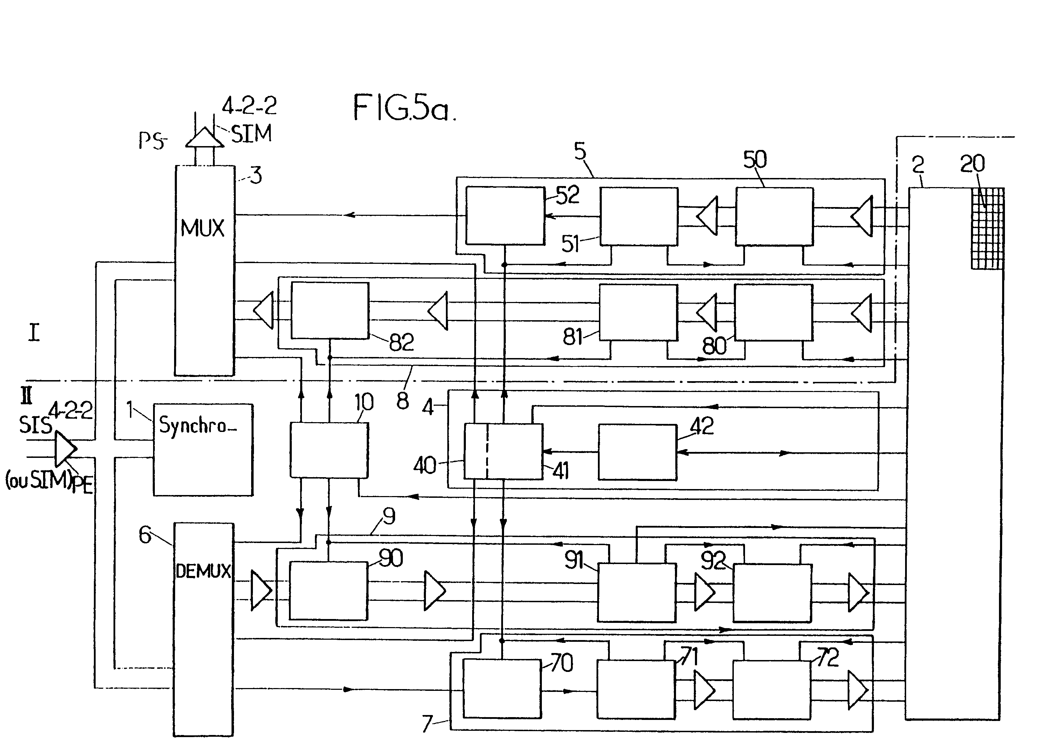

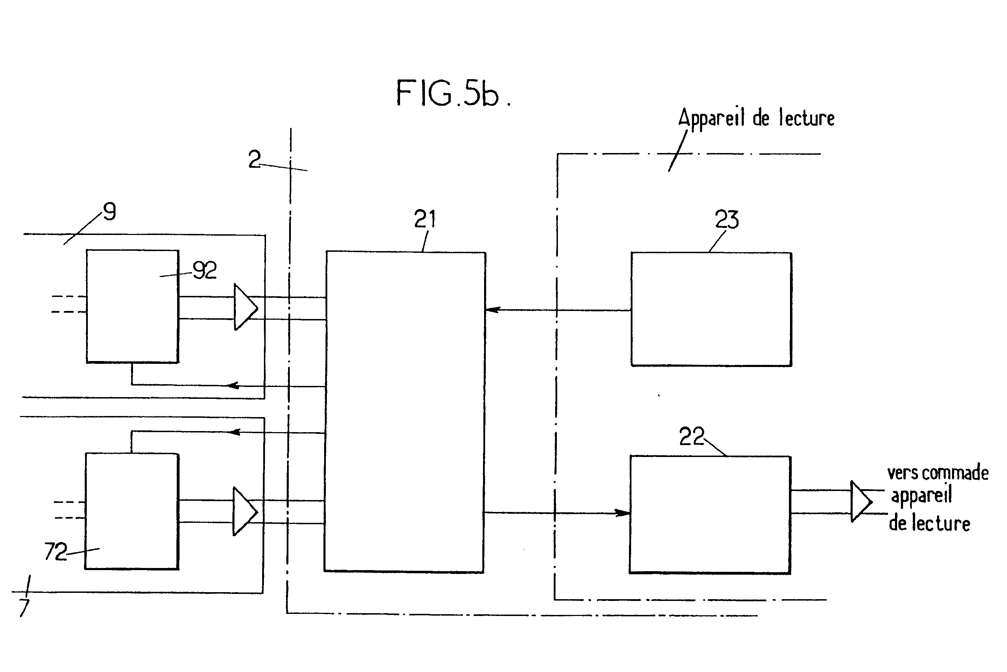

Une description plus détaillée d'un système permettant d'assurer une protection contre les copies illicites sur une bande d'enregistrement numérique à partir d'un magnétoscope d'une image de télévision sera donnée en liaison avec les figures 5a et 5b.

Sur la figure 5a on a représenté un système conforme à l'objet de la présente invention dans lequel les éléments déjà représentés en figure 4 portent les mêmes références. En outre, le système comprend un circuit 8 permettant l'inscription dans une zone réservée du support de l'information numérisée, l'information source par exemple, d'un message ou de données d'identification. La zone réservée précitée est distincte de la zone support des mots d'information $M_l$. Le message ainsi inscrit dans la zone réservée n'est autre que le message alphanumérique associé par encodage ou par détection ainsi que précédemment décrit en liaison avec le procédé objet de l'invention ou une partie de celui-ci, le message ainsi inscrit dans la zone réservée étant destiné à constituer une version de référence ou de comparaison vis à vis du message d'identification encodé ou de la partie de celui-ci.

En outre, un circuit 9 de lecture du message ainsi inscrit dans la zone réservée est également prévu pour engendrer la version de référence ou de comparaison du message ou données d'identification précité. Ainsi qu'on l'a représenté en figure 5a le circuit d'inscription comprend une mémoire de type RAM 82 organisée en octets, un élément 81 interconnecté à la mémoire de type RAM 82 jouant un rôle semblable au circuit 51 du deuxième circuit spécialisé 5 pour assurer notamment le formatage des données d'identification et la gestion des conflits d'accès lecture-écriture de la mémoire 82, ainsi qu'une mémoire de type RAM organisée en octets jouant un rôle analogue au circuit 50 du deuxième circuit spécialisé 5.

De la même façon, le circuit de lecture 9 comporte des éléments duaux notés 90,91,92 des circuits 82,81,80 du circuit d'écriture 8. Ainsi, le circuit 90 est constitué par une mémoire de type RAM, les circuits 90 et 82 étant constitués en mémoire d'octets contenant les données d'identification à inscrire ou lues dans la zone réservée. Les circuits d'inscription 8 et de lecture 9 sont interconnectés d'une part au circuit de commande 2 et d'autre part respectivement au multiplexeur 3 et au démultiplexeur 6.

Dans le cas où l'information numérisée est constituée par des images de télévision, la zone réservée est de préférence constituée par une ou plusieurs demi-lignes vidéo, les messages d'identification étant ainsi limités à 712 caractères par demi-ligne vidéo. Le message d'identification est ainsi mis au format de données auxiliaires inscrit sur les demi-lignes précitées.

En outre, ainsi qu'on le remarquera sur la figure 5a, un circuit 10 permet d'assurer à partir des signaux de synchronisation délivrés par le circuit 1 le séquencement des adresses de la mémoire de type RAM octets d'écriture 82 du circuit d'inscription 8 et de la mémoire de type RAM octets de lecture 90 du circuit de lecture 9. Le circuit 10 précité permet également d'assurer la commande du multiplexeur 3 et du démultiplexeur 6 à partir des instructions adressées par le circuit de commande 2 en fonction du standard 525/60 ou 625/50 détecté par le circuit de synchronisation 1.

Ainsi qu'on l'a en outre représenté en figure 5b, le circuit de commande 2 comporte également un circuit 21 permettant d'assurer la comparaison du message ou données d'identification, le message d'identification encodé au niveau de chaque mot d'information $M_l$ pour constituer des mots d'information porteurs de données d'identification et de la version de comparaison du message inscrit dans la zone réservée précédemment décrite. Le circuit 21 de comparaison est ainsi interconnecté d'une part à la mémoire de type RAM 92 du circuit de lecture 9, cette mémoire contenant la version de référence du message d'identification et d'autre part à la mémoire de caractères 72 du troisième circuit spécialisé 7 lequel contient le message d'identification obtenu à partir de la détection des mots d'information $M_l$ porteurs de données d'identification.

En outre, le circuit de commande 2 comporte également un circuit 22 de commande d'inhibition de l'appareil de lecture des données d'information numérisée, tel qu'un magnétoscope dans le cas d'images de télévision, et un circuit de détection 23 de l'absence de fonctionnement des circuits de dissimulation d'erreur d'enregistrement de l'appareil de lecture/écriture. Ce circuit 22 peut en outre, de manière avantageuse, être constitué par le microprocesseur de commande de l'appareil de lecture c'est-à-dire du magnétoscope, programmé en conséquence. Le circuit 23 est également de préférence intégré à l'appareil de lecture. Ce circuit délivre un signal d'absence de dissimulation d'erreur. L'inhibition de lecture intervient sur réponse négative à un test d'identité entre le message ou données de contrôle, ou une partie de celui-ci, provenant de la détection ou du repérage des mots d'information $M_l$ porteurs des données de contrôle et la version de comparaison de ce message inscrite dans la zone réservée du support d'information, le circuit 23 délivrant le signal d'absence de dissimulation d'erreur, les différences entre les informations de contrôle et la version de référence étant alors imputables à la seule lecture d'une copie illicite de deuxième génération.

Ces données d'identification ou messages d'identification encodés au niveau des mots d'information sucessifs $M_l$ constituent alors les informations de contrôle, lesquels enregistrés avec des erreurs qui ne sont plus dues à la mise en service des circuits de dissimulation du magnétoscope de lecture lors de la relecture d'une copie de deuxième génération permettent de distinguer aisément ces copies de copies de première génération et ainsi n'autoriser que la lecture de ces dernières dès la détection de la première erreur sur les informations de contrôle non dues à la mise en oeuvre des circuits de dissimulation d'erreur du magnétoscope.

On notera en outre que le système objet de l'invention tel que représenté en figure 5a comporte deux parties référencées I et II délimitées en trait mixte. En vue d'une utilisation grand public, seule la partie II, fonctionnant en lecture d'information protégée selon l'objet de la présente invention, doit être intégrée dans l'appareil de lecture/écriture protégé afin d'empêcher l'utilisateur de faire usage de copies illicites. Dans ce cas, le circuit interface 20 peut être remplacé par un circuit de chargement des informations d'adresses des mots d'informations $M_l$ porteurs des informations de contrôle.

On a ainsi décrit un procédé de marquage d'information numérisée particulièrement avantageux, notamment dans le domaine d'application grand public, dans la mesure où le procédé objet de l'invention permet la mise en oeuvre d'un système de protection contre la réalisation et l'utilisation de copies illicites de programmes vidéo-numériques.

## Revendications

1. Procédé de marquage d'information numérisée, dans lequel l'information est numérisée sous forme de mots successifs constitués par un ensemble de bits, lesdits mots étant organisés en un arrangement séquentiel pour constituer l'information numérisée, ce procédé consistant à associer auxdits mots des données d'identification codées transparentes relativement à ladite information numérisée, les mots étant constitués par N bits et les données d'identification étant associées par codage spécifique d'un des bits de poids le moins élevé d'une pluralité de mots d'information, conformés ainsi en mots porteurs de données d'identification, caractérisé en ce que ladite pluralité de mots porteurs de données d'identification est un multiple de N, lesdites données d'identification étant constituées par une ou plusieurs chaînes de caractères alpha-numériques.

2. Procédé selon la revendication 1, caractérisé en ce que les données d'identification sont associées par codage spécifique d'un des bits de poids le moins élevé sur une pluralité de mots d'adresses déterminées dans les mots d'information organisés en arrangement séquentiel.

3. Procédé selon la revendication 2, caractérisé en ce que lesdites adresses sont régulièrement réparties dans les mots d'information organisés en arrangement séquentiel, selon une loi de périodicité donnée.

4. Procédé selon la revendication 2, caractérisé en ce que lesdites adresses sont réparties de manière aléatoire ou pseudo-aléatoire.

5. Procédé selon l'une quelconque des revendications précédentes, caractérisé en ce que, pour des mots de N bits, la valeur de chaque bit d'un mot de donnée d'identification à coder a pour valeur, dans l'ordre de succession des dits mots codés par codage spécifique, la valeur $2^{N-1}$ à $2^0$.

6. Procédé selon la revendication 1, caractérisé en ce que, lesdits mots d'information étant constitués par N bits, lesdites données d'identification sont associées sous forme d'au moins un mot à coder aux mots d'information par les opérations consistant à :
   – repérer dans les mots d'information successifs de l'ensemble de bits constitutifs de l'information numérisée un bit présentant la valeur du bit de poids déterminé du mot à coder,
   – associer audit bit repéré le poids correspondant au poids du bit du mot d'identification à coder pour constituer un bit repéré du mot à coder,
   – mémoriser l'adresse dudit bit repéré,
   – répéter successivement les opérations précédentes pour les bits successifs du mot à coder pour constituer un fichier d'identification de l'information numérisée, ledit fichier étant mémorisé dans une zone d'identification d'information mémorisée.

7. Procédé selon la revendication 6, caractérisé en ce que lesdites données d'identification sont associées soit aux mots d'information numérisée d'un support d'information source ou origine, soit aux mots d'information numérisée encodés conformément au procédé selon les revendications 1 à 5 précédentes.

8. Procédé selon l'une des revendications précédentes, caractérisé en ce que ladite information numérisée étant une information sonore ou vidéo les mots d'information et le ou les mots d'identification sont des mots de huit bits.

9. Procédé selon la revendication 8, caractérisé en ce que dans le cas où lesdites données d'identification sont associées par codage spécifique du bit de poids le moins élevé, selon les revendications 1 à 5, ledit procédé consiste à :
   a)- sélectionner huit mots d'information appartenant au support d'origine ou source, ces mots d'information étant repérés successivement par leur adresse dans l'arrangement séquentiel,
   b)- affecter au bit de poids le moins élevé de chacun des huits mots d'information repérés la valeur zéro,
   c)- affecter respectivement au bit de poids le moins élevé desdits mots d'information repérés, dans l'ordre de leur repérage, la valeur du bit de poids correspondant du mot à coder pour constituer des mots porteurs de données d'identification.

10. Procédé selon la revendication 9, caractérisé en ce qu'il comporte en outre préalablement à l'étape b) une étape de contrôle consistant à :
   – comparer bit à bit la valeur desdits bits d'un mot porteur de données d'identification fictif formé par le bit de poids correspondant du mot à encoder et par les bits de poids supérieur dudit mot porteur d'information à des mots de code réservé, ou à des mots de code voisin de ces mots de code réservé,

– annuler l'étape a) précitée pour ledit mot d'information pour effectuer à nouveau ladite étape a) relativement à un mot d'information d'ordre supérieur dans l'arrangement séquentiel pour repérer un mot d'information de substitution dont les bits de poids supérieur associés au bit de poids correspondant à encoder sont différents dudit code réservé ou du code voisin.

11. Procédé selon l'une des revendications précédentes, caractérisé en ce que pour des informations vidéo numérisées, telles que des signaux de télévision numérique, les mots d'information sont localisés dans des portions du format du multiplex vidéo numérique susceptibles d'être enregistrées au moyen d'un magnétoscope de télévision numérique.

12. Procédé selon la revendication 8 ou 11, caractérisé en ce que pour des informations vidéo numérisées, telles que des images de télévision numérique, lesdits mots d'information, dans le cas où lesdites données d'identification sont associées aux mots d'information conformément au procédé selon les revendications 6 ou 7, lesdits mots d'information sont repérés entre des première et deuxième colonnes d'ordre p et q de l'image, avec p<q dans le sens de balayage ligne, sur le bit de poids $2^1$.

13. Système de marquage et d'identification d'information numérisée sous forme de mots d'information $(M_i)$ successifs constitués par un ensemble de bits, le marquage étant effectué par insertion dans l'information source de données d'identification et l'identification par restitution, à partir de l'information marquée, desdites données d'identificaion, ledit système comportant un port d'entrée d'un signal support de ladite information source ou marquée et un port de sortie d'un signal support de ladite information marquée, ledit système comportant des moyens extracteurs d'un signal de synchronisation à partir du signal support d'information source ou marquée, des moyens de commande du marquage ou de l'identification de ladite information numérisée, lesdits moyens de commande recevant ledit signal de synchronisation délivré par lesdits moyens extracteurs, caractérisé en ce qu'il comporte en outre :

– des moyens multiplexeurs de bits, interconnectés audit port d'entrée et recevant ledit signal support de ladite information source ou marquée, lesdits moyens multiplexeurs étant connectés auxdits moyens de commande par l'intermédiaire d'un premier et d'un deuxième circuit spécialisé, ledit premier circuit spécialisé permettant d'assurer la commande fonctionnement/arrêt desdits moyens multiplexeurs en fonction de la nature de ladite information source ou marquée, présente au port d'entrée, ledit deuxième circuit spécialisé permettant d'engendrer et de délivrer, auxdits moyens multiplexeurs, un bit de substitution dans un mot d'information $(M_i)$ considéré,

– des moyens démultiplexeurs de bit interconnectés audit port d'entrée et recevant ledit signal support de ladite information source ou marquée, lesdits moyens démultiplexeurs étant connectés auxdits moyens de commande par l'intermédiaire, d'une part, dudit premier circuit spécialisé permettant d'assurer la commande arrêt/fonctionnement desdits moyens démultiplexeurs en fonction de la nature de l'information, source ou marquée, et, d'autre part, d'un troisième circuit spécialisé permettant d'assurer l'extraction d'un mot d'information $(M_i)$, d'un bit significatif desdites données d'identification, lesdits moyens de commande permettant à partir dudit signal de synchronisation d'assurer, en fonction de la nature de l'information numérisée, source ou marquée, la substitution respectivement l'extraction d'un bit d'un mot d'information $(M_i)$ pour engendrer ou restituer lesdites données d'identification.

14. Système selon la revendication 13, caractérisé en ce que ledit premier circuit spécialisé comporte :

– des moyens d'activation/inhibition et d'inhibition/activation dudit multiplexeur respectivement démultiplexeur,

– des moyens de commande de choix du poids dudit bit dudit mot d'information $M_i$ sur lequel ledit bit significatif des données d'identification est substitué respectivement extrait.

15. Système selon l'une des revendications 13 ou 14, caractérisé en ce que ledit deuxième circuit spécialisé comporte :

– une mémoire de caractères interconnectée auxdits moyens de commande et destinée à mémoriser le ou les caractères constitutifs des données ou message d'identification à insérer dans lesdites données d'information numérisées,

– un circuit de formatage de caractères interconnecté à ladite mémoire de caractères, et destiné à extraire et à formater séquentiellement lesdits caractères constitutifs des données ou messages d'identification,
– un circuit générateur de bit significatif interconnecté audit circuit de formatage et audit premier circuit spécialisé et destiné à délivrer audit circuit multiplexeur ledit bit significatif.

16. Système selon l'une des revendications 13 à 15 précédentes, caractérisé en ce que ledit troisième circuit spécialisé comporte :
– un premier circuit de mémorisation de bits interconnecté audit démultiplexeur et audit premier circuit spécialisé et destiné à recevoir séquentiellement dudit multiplexeur le bit significatif d'un ou plusieurs mots d'informa-tion $(M_i)$ constitutifs desdits informations mar-quées,
– un deuxième circuit de mémorisation de caractères connecté audit premier circuit de mémorisation de bits et destiné à mémoriser et formater les bits significatifs successifs délivrés par ledit circuit de mémorisation de bits,
– un troisième circuit de mémorisation de chaîne de caractères formant message ou donnée d'identification, ce circuit étant interconnecté audit deuxième circuit de mémorisation et aux moyens de commande et délivrant ledit message ou données d'identification à ce dernier.

17. Système selon l'une des revendications 13 à 16, caractérisé en ce que lesdits moyens de commande comportent un circuit d'interfaçage d'entrée, permettant l'introduction des adresses $(A_i)$ des mots d'information $(M_i)$ sur lesquels l'insertion ou la lecture du bit significatif des données d'identification doit être effectuée.

18. Système selon l'une des revendications 13 à 17, caractérisé en ce que, en vue d'assurer une protection dissuasive contre l'exécution et l'utilisation illicite d'information numérisée telle que des images de télévision numérique à partir d'un appareil d'écriture-lecture de cette information comportant un circuit de dissimulation d'erreur d'enregistrement, ce système comporte en outre:
– des moyens d'inscription, dans une zone réservée du support de ladite information numérisée, distincte de la zone support des mots d'information $(M_i)$, d'un message ou données d'identification,
– des moyens de lecture, dans ladite zone réservée, dudit message ou données d'identification pour engendrer une version de comparaison dudit message ou données d'identification, lesdits moyens de commande comprenant :

. des moyens de comparaison dudit message ou données d'identification et de la version de comparaison du message ou données d'identification,
. des moyens de détection de l'absence de fonctionnement des circuits de dissimulation d'erreur d'enregistrement, ces moyens de détection délivrant un signal d'absence de dissimulation d'erreur,
. des moyens de commande d'inhibition de l'appareil de lecture sur réponse négative à un test d'identité entre le message ou données d'identification et la version de comparaison de ce message ou données d'identification, sur détection d'une absence de dissimulation d'erreur d'enre-gistrement.

FIG.1a.

Mi
⌐‾‾‾‾⌐

| 1000 0000 | | 1000 0001 |

a)   80      11    //   81 ‾Mi   10     80     11     80     11
Mots (1)    (2)   //   (i)                                    (N)

| 1000 0000 |

b).   80      10    //   80 ‾Mi   10     80     10     80     10
Mise à (1)   (2)   //   (i)                                    (N)
zéro de 2°

| 0 | 1 | // 0 | 0 | 0 | 0 | 1 | 1 |

c)   0       1    //   0       0      0      0      1      1
    (1)     (2)        (i)                                    (N)
Mots d'identification
à coder

d)   80      11    //   80 ‾Mi   10     80     10     81     11
    (1)     (2)   //   (i)                                    (N)
Mots d'information
encodés

FIG.1b .

Mot porteur d'information
fictif
⌐‾‾‾‾‾‾‾‾‾‾‾‾‾‾‾‾‾‾‾‾‾‾‾⌐
bit d'ordre supérieur   bite de poids
du mot d'information correspond-
                      -ant

| 1 | 0 | 0 | 0 |   | 0 | 0 | 0 | 1 |

| 0 | 0 | 0 | 0 |   | 0 | 0 | 0 | 0 |

00 code réservé

01 code voisin de code réservé

vers étape ultérieure
pour le mot d'information
Mi

−

?
$=$

+   Mot d'information
    inchangé

-Annulation du repérage
 du mot d'information
 Mi d'adresse Ai
-Choix d'un mot d'information d'ordre
 supérieur d'adresse Ai+k pour repérer
 un nouveau mot d'information Mi

# FIG. 2a.

| L/C Adresse | 5 0 | 6 1 | 7 2 | 8 3 | 9 4 | 10 5 | 11 6 | 12 7 | 13 8 | 14 9 | 15 A | 16 B | 17 C | 18 D | 19 E | Mot identification a coder | Adresse |
|---|---|---|---|---|---|---|---|---|---|---|---|---|---|---|---|---|---|
| n | 80 | 10 | 80 | 10 | 80 | 10 | 80 | 10 | 80 | 10 | 80 ** | 10 | 80 | 10 | 80 | 0 | A |
| n+1 | 81 | 12 ** | 87 | 12 | 82 | 13 | 86 | 14 | 83 | 15 | 85 | 16 | 84 | 17 | 84 | 1 | 1 |
| n+2 | 80 ** | 10 | 80 | 10 | 80 | 10 | 80 | 10 | 80 | 10 | 80 | 10 | 80 | 80 | 80 | 0 | 0 |
| n+3 | . | . | . | . | . | . | 6A | 29 ** | 79 | . | . | . | . | . | . | 0 | 7 |
| n+4 | . | . | . | . | . | . | . | . | . | . | . | . | 84 ** | 17 | 87 | 0 | C |
| n+5 | . | . | . | . | . | . | 6B | 25 ** | 60 | 26 | . | . | . | . | . | 0 | 7 |
| n+6 | . | . | . | . | . | . | 6B | 25 | 60 | 26 ** | . | . | . | . | . | 1 | 9 |
| n+7 | 80 | 10 | 80 | 10 | 80 | 10 | 80 | 10 | 80 | 10 | 80 | 10 | 80 | 10 | 80 | 1 | (F) |
| n+8 | . | . | . | . | . | . | . | . | . | . | . | . | . | . | . | | |
| n+9 | . | . | . | . | . | . | . | . | . | . | . | . | . | . | . | | |

# FIG. 2b.

| ordre du mot d'information | poids du bit mot d'identification | quartet du mot d'information $2^3\ 2^2\ 2^1\ 2^0$ | mot d'identification | adresse |
|---|---|---|---|---|
| 1 | N_1 (7) | ☐☐0☐ | 0 | A |
| 2 | N_2 (6) | ☐☐1☐ | 1 | 1 |
| 3 | N_3 (5) | ☐☐0☐ | 0 | 0 |
| 4 | N_4 (4) | ☐☐0☐ | 0 | 7 |
| 5 | N_5 (3) | ☐☐0☐ | 0 | C |
| 6 | N_6 (2) | ☐☐0☐ | 0 | 7 |
| 7 | N_7 (1) | ☐☐1☐ | 1 | 9 |
| 8 | N_8 (0) | 0 0 0 0 | 1 | (F) |

EP 0 441 702 A1

| L/C | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|
| Adresse | 0 | 1 | 2 | 3 | 4 | 5 | 6 | 7 | 8 | 9 | A | B | C | D | E |
| n | 80 | 11 | 80 | 10 | 80 | 10 | 81 | 11 | 80 | 10 | 80 ** | 10 | 80 | 10 | 80 |
| n+1 | 81 | 12 ** | 87 | 12 | 82 | 13 | 86 | 14 | 83 | 15 | 85 | 16 | 84 | 17 | 84 |
| n+2 | 80 ** | 10 | 80 | 10 | 80 | 10 | 80 | 10 | 80 | 10 | 80 | 10 | 80 | 80 | 80 |
| n+3 | . | . | . | . | . | . | 6A | 29 ** | 79 | . | . | . | . | . | . |
| n+4 | . | . | . | . | . | . | . | . | . | . | . | . | 84 ** | 17 | 87 |
| n+5 | . | . | . | . | . | . | 6B | 25 ** | 60 | 26 | . | . | . | . | . |
| n+6 | . | . | . | . | . | . | 6B | 25 | 60 | 26 ** | . | . | . | . | . |
| n+7 | 80 | 10 | 80 | 10 | 80 | 10 | 80 | 10 | 80 | 10 | 80 | 10 | 80 | 10 | 80 |
| n+8 | . | . | . | . | . | . | . | . | . | . | . | . | . | . | . |
| n+9 | . | . | . | . | . | . | . | . | . | . | . | . | . | . | . |

a) 80 11 81 10 80 11 80 11  → 0  A

b) 80 10 80 10 80 10 80 10  → 0  1

c) 0 1 0 0 0 0 1 1  → 1  1

d) 80 11 80 10 80 10 81 11  → 0  0

0 7

0 C

0 7

1 9

1 (F)

— — — — — — — — — — — — — — a)
— — — — — — — — — — — — — — b)
— — — — — — — — — — — — — — c)
n+p — — — — — — — — — — — — — — d)

FIG.3.

FIG.4

EP 0 441 702 A1

FIG.5a.

EP 0 441 702 A1

FIG.5b.

Appareil de lecture

2

9

92

21

23

72

7

22

vers commade
appareil
de lecture

EP 0 441 702 A1

Office européen
des brevets

# RAPPORT DE RECHERCHE EUROPEENNE

Numero de la demande

EP    91 40 0282

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | WO-A-8908915 (IMPERIAL COLLEGE OF SCIENCE,TECHNOLOGY & MEDICINE) * le document en entier * | 1-13, 15, 18 | G11B20/00 G11B27/30 H04N5/91 |
| D,A | EP-A-0205200 (POLYGRAM G.M.B.H.) * le document en entier * | 1, 2, 4, 5-9, 11, 13, 15, 16 | |
| A | EP-A-0107567 (THOMSON-CSF) * le document en entier * | 1, 6, 11, 13, 18 | |
| A | WO-A-8201273 (LOFBERG) * le document en entier * | 1, 3-8, 11, 13, 15, 18 | |
| A | WO-A-8912890 (DUPRE) * page 12, ligne 31 - page 22, ligne 8 * | 1, 11, 13 | |
| A | GB-A-2196167 (THORN EMI PLC) * le document en entier * | 1, 13 | DOMAINES TECHNIQUES RECHERCHES (Int. Cl.5) |
| A | EP-A-0078218 (SOCIETE SCOME-FRANCE) * le document en entier * | 1, 13 | G11B H04N |

Le présent rapport a été établi pour toutes les revendications

| Lieu de la recherche | Date d'achèvement de la recherche | Examinateur |
|---|---|---|
| LA HAYE | 16 MAI 1991 | DAALMANS F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)